(19) Europäisches Patentamt
European Patent Office
Office européen des brevets

(11) Veröffentlichungsnummer: **0 187 121**
**B1**

(12) # EUROPÄISCHE PATENTSCHRIFT

(45) Veröffentlichungstag der Patentschrift: **13.07.88**

(51) Int. Cl.⁴: **C 08 G 59/40**

(21) Anmeldenummer: **85810604.0**

(22) Anmeldetag: **16.12.85**

(54) **Heisshärtbare Epoxidharz-Zusammensetzungen.**

(30) Priorität: **22.12.84 GB 8432606**

(43) Veröffentlichungstag der Anmeldung: **09.07.86 Patentblatt 86/28**

(45) Bekanntmachung des Hinweises auf die Patenterteilung: **13.07.88 Patentblatt 88/28**

(84) Benannte Vertragsstaaten: **AT BE CH DE FR GB IT LI NL SE**

(56) Entgegenhaltungen:
**EP-A-0 113 233**
**DE-A-1 916 051**

(73) Patentinhaber: **CIBA-GEIGY AG, Klybeckstrasse 141, CH-4002 Basel (CH)**

(72) Erfinder: **Andrews, Christopher Michael, 192, Vinery Road, Cambridge CB1 3DS (GB)**

EP 0 187 121 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft heisshärtbare Epoxidharz-Zusammensetzungen und vernetzte Produkte, die durch Heisshärtung der Epoxidharz-Zusammensetzung erhalten werden.

Bekanntlich können Epoxidharze, d.h., Substanzen mit durchschnittlich mehr als einer 1,2-Epoxidgruppe pro Molekül, durch Umsetzung mit Verbindungen verschiedener Art zuvernetzten, unschmelzbaren, unlöslichen Produkten mit wertvollen technischen Eigenschaften ausgehärtet werden.

In der US-PS 3 386 956 wird die Härtung von Epoxidharzen mit Harnstoffen der Formeln I, II, III oder IV

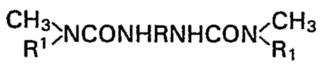
(I),

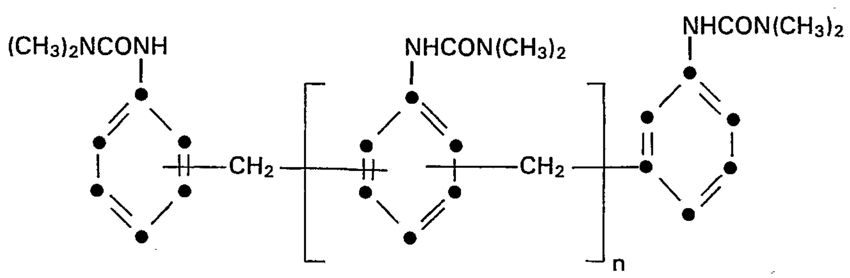
(II),

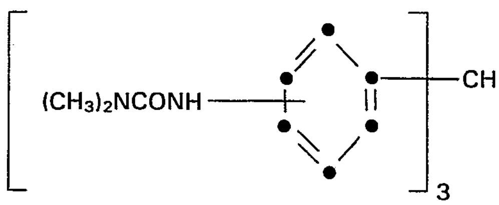
(III),

oder

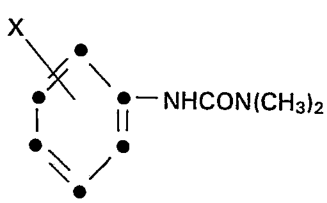
(IV)

beschrieben, worin

R eine zweiwertige methyl-substituierte Phenylen-, Methylendiphenylen, Dimethoxydiphenylen- oder Dimethyldiphenylengruppe,

$R^1$ $-CH_3$ oder $-CH_2CH_2OH$,

n eine ganze Zahl von 2-5 und

X $-OCH_3$, -Cl, -H, $CH_3$ oder $-NO_2$ bedeuten.

In der genannten US-PS wird auch erwähnt, dass die härtende Wirkung dieser Verbindungen durch Mitverwendung von Dicyandiamid, Stearinsäurehydrazid, Adipinsäuredihydrazid, Succinimid oder Cyanacetamid in den härtbaren Gemischen beschleunigt werden kann. Gemäss dieser Patentschrift können durch Verwendung der genannten Harnstoffe vorbekannten härtbaren Epoxidharz-Zusammensetzungen anhaftende Schwierigkeiten überwunden werden, nämlich die bei Verwendung von Dicyandiamid als Härtungsmittel erforderlichen relativ hohen Härtungstemperaturen und relativ langen Härtungszeiten oder das vorzeitige Härten bei Verwendung von reaktiveren Härtungsmitteln oder Beschleunigern, die somit bei Raumtemperatur nicht ausreichend latent sind.

Gemäss der US-PS 3 660 316 können 1-Cyan-3--(niederalkyl)guanidine ebenfalls die Härtung von Epoxidharzen mit Bisharnstoffen der Formeln II bis IV beschleunigen.

Harnstoffe der oben angegebenen Formeln, besonders N-(4-Chlorphenyl)-N',N'-dimethylharnstoff und 2,4-Bis(N,N-Dimethylureido)toluol sind im Handel, allein oder zusammen mit Dicyandiamid, als Beschleuniger zum Härten von Epoxidharzen oder als Beschleuniger zum Härten von Epoxidharzen mit Dicyandiamid erhältlich.

Wegen der immer strengeren Anforderungen an härtbare Gemische bezüglich hoher Lagerstabilität bei Raumtemperatur verbunden mit einer schnellen Härtung bei mässig erhöhten Temperaturen (z.B. 120°C) wird nach einem Ersatz der obigen Harnstoffe gesucht.

In der europäischen Patentveröffentlichung EP-A-0 108 712 werden heisshärtbare Zusammensetzungen beschrieben, die ein Epoxidharz und eine wirksame Menge eines m- oder p-Hydroxyphenylharnstoffs der Formel V

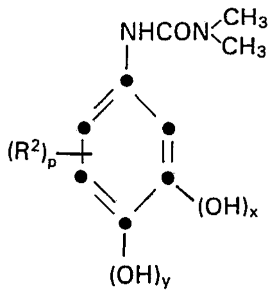

(V)

enthalten, worin

$R^2$ -$NH_2$, -$NO_2$, -Cl, -Br oder Alkyl mit 1-10 C-Atomen,

p Null, 1 oder 2, und

x und y je Null oder 1 bedeuten, wobei die Summe aus x + y 1 beträgt.

Heisshärtbare Zusammensetzungen, die ein Epoxidharz und o-Hydroxyphenylharnstoffe der oben genannten Art enthalten, sind auch in der US-PS Nr. 4 404 356 beschrieben.

Es wurde nun gefunden, dass überraschenderweise heisshärtbare Epoxidharz-Zusammensetzungen mit sehr hoher Lagerstabilität bei Raumtemperatur und kurzen Härtungszeiten bei mässig erhöhten Temperaturen dadurch erhalten werden können, indem man als Härtungsmittel einen Harnstoff mit einer amido-substituierten aromatischen Gruppe verwendet.

Demgemäss betrifft die Erfindung heisshärtbare Zusammensetzungen enthaltend

(a) ein Epoxidharz und

(b) eine wirksame Menge eines Harnstoffs der Formel VI

$$Ar\text{-}NHCON(R^3)R^4 \qquad (VI),$$

worin

Ar eine durch eine Amidogruppe substituierte aromatische Gruppe darstellt, die über ein aromatisches Kohlenstoffatom an das in Formel VI angegebene Stickstoffatom gebunden ist,

$R^3$ und $R^4$ je einen aliphatischen, cycloaliphatischen oder araliphatischen Kohlenwasserstoffrest darstellt, der unsubstituiert oder durch ein Halogenatom, vorzugsweise durch ein Chloratom, oder durch eine Hydroxylgruppe substituiert sein kann, wobei $R^3$ auch ein Wasserstoffatom darstellen kann, oder $R^3$ und $R^4$ zusammen mit dem in Formel VI angegebenen Stickstoffatom einen im Ring 3-5 Kohlenstoffatome und gegebenenfalls ein Sauerstoffatom enthaltenden hererocyclischen Ring bilden.

Gegenstand der Erfindung sind auch die durch Heisshärtung der erfindungsgemässen Zusammensetzungen erhaltenen vernetzten Produkte.

In Formel VI stellt Ar bevorzugt eine durch eine Amidogruppe substituierte aromatische Gruppe mit 6-30 C-Atomen dar. Gemäss einer weiteren Bevorzugung ist Ar eine Arylgruppe mit 6-10 C-Atomen, besonders eine Phenylgruppe, die durch eine Amidogruppe substituiert ist und ferner durch ein oder mehrere Halogenatome, Amino- oder Nitrogruppen oder Alkylgruppen mit 1-10 C-Atomen substituiert sein kann. Bevorzugt sind Amidophenylharnstoffe der Formel VII

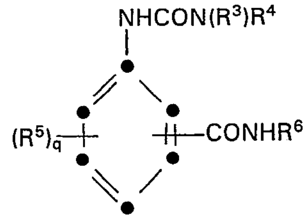

(VII),

worin

$R^3$ und $R^4$ die oben angegebenen Bedeutungen haben,

$R^5$ ein Halogenatom, eine Amino- oder Nitrogruppe oder eine Alkylgruppe mit 1-10 C-Atomen,

$R^6$ ein Wasserstoffatom oder eine unsubstituierte oder durch eine Hydroxylgruppe substituierte Alkylgruppe mit 1-10 C-Atomen und

q Null, 1 oder 2 bedeuten.

$R^3$ und $R^4$ stellen bevorzugt je eine Alkylgruppe mit 1-6 C-Atomen, eine Hydroxyalkylgruppe mit 2-4 C-Atomen, eine Cycloalkylgruppe mit 3-7 C-Atomen oder eine Aralkylgruppe mit 7-9 C-Atomen dar. Beispiele von geeigneten Gruppen $R^3$ und $R^4$ sind Methyl, Ethyl- n-Propyl, tert.-Butyl, Cyclohexyl, 4-Methylcyclohexyl, 2-Hydroxyethyl und Benzyl. Besonders bevorzugt sind Amidophenylharnstoffe, worin $R^3$ und $R^4$ je Methyl darstellen oder worin $R^3$ Methyl ist und $R^4$ 2-Hydroxyethyl bedeutet. Stellen $R^3$ und $R^4$ zusammen mit dem Stickstoffatom einen heterocyclischen Ring dar, so handelt es sich z.B. um einen Piperidin-, Morpholin- oder Pyrrolidinring.

Verbindungen, worin $R^3$ und $R^4$ ungleich Methyl sind, oder worin $R^3$ ungleich Methyl und $R^4$ ungleich 2-Hydroxyethyl sind, sind gegenüber Epoxidharzen weniger reaktiv und eignen sich daher als Härtungsmittel für solche Fälle, bei denen ein zu schnelles Härten und das Entwickeln beträchtlicher Wärme schädlich sein kann.

In Formel VII ist q bevorzugt Null oder 1 und $R^5$ stellt bevorzugt -$NO_2$, Cl oder Alkyl mit 1-4 C-Atomen, besonders eine Methylgruppe, dar.

$R^6$ ist vorzugsweise ein Wasserstoffatom, eine Alkylgruppe mit 1-6 C-Atomen oder eine Hydroxyalkylgruppe mit 2-4 C-Atomen.

Als Beispiele von besonders bevorzugten Amidophenylharnstoffen der Formel VII seien genannt: N-(2-Carboxyamidophenyl)-N',N'-dimethylharnstoff, N-(3-Carboxyamidophenyl)-N',N'-dimethylharnstoff, N-(4-Carboxamidophenyl)-N',N'-dimethylharnstoff, N-(2-Carboxamido-4-chlorphenyl)-N',N'-dimethylharnstoff, N-(2-Carboxamido-5-chlorphenyl)-N',N'-dimethylharnstoff, N-(2-Carboxyamido-4-nitrophenyl)-N',N'-dimethylharnstoff, N-(2-Carboxyamido-4-methylphenyl)-N',N'-dimethylharnstoff, N-[2-(N''-Methylcarboxamido)-phenyl]-N',N'-dimethylharnstoff, N-[2-(N''-Butylcarboxamido)-phenyl)-N',N'-dimethylharnstoff, N-(2-Carboxamidophenyl)-N'-methyl-N'-(2-hydroxyphenyl)-harnstoff oder N-[2-(N''-Hydroxyethyl-carboxamido)-phenyl]-N',N'-dimethylharnstoff.

Substituierte Harnstoffe der Formel VI sind im allgemeinen bekannt oder können nach an sich bekannten Methoden hergestellt werden, z.B. durch Umsetzung eines Amins der Formel VIII

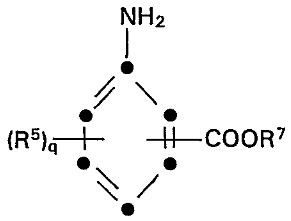

(VIII),

worin $R^5$ und q die oben angegebene Bedeutung haben und $R^7$ eine Alkylgruppe mit 1-4 C-Atomen darstellt, mit Phosgen zu dem entsprechenden Isocyanat, Umsetzung des Isocyanats mit einem Amin der Formel IX

$$NH(R^3)R^4 \qquad (IX),$$

worin $R^3$ und $R^4$ die oben angegebene Bedeudung haben, zu einem Phenylharnstoff und Umsetzung dieses Phenylharnstoffs mit Ammoniak oder einem Amin der Formel $R^6NH_2$, wobei die Estergruppe $-COOR^7$ in die Amidgruppe $-CONHR^6$ übergeführt wird.

Die Umsetzung zu den Isocyanaten und den Harnstoffen werden im allgemeinen in einem organischen Lösungsmittel durchgeführt.

Eine andere geeignete Herstellungsmethode für Verbindungen, worin $R^6$ ein Wasserstoffatom bedeutet, besteht darin, dass man ein Amin der Formel X

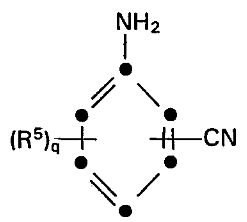

(X),

worin $R^5$ und q die oben angegebene Bedeutung haben, mit Phosgen zu dem entsprechenden Isocyanat umsetzt, das Isocyanat mit einem Amin der Formel IX zu einem Phenylharnstoff umsetzt und den Phenylharnstoff in wässrigem Alkali mit Wasserstoffperoxid umsetzt, wobei die Cyangruppe in eine $-CONH_2$-Gruppe übergeführt wird.

Gemäss einem weiteren Verfahren werden Benzamide der Formel XI

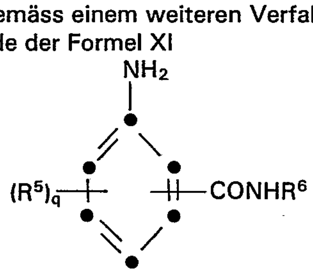

(XI),

worin $R^5$, $R^6$ und q die oben angegebene Bedeutung haben, mit einem Carbamoylhalogenid der Formel XII

$$X\text{-}CON(R^3)R^4 \qquad (XII),$$

worin $R^3$ und $R^4$ die oben angegebene Bedeutung haben, und X ein Halogenatom, bevorzugt ein Chloratom, darstellt, umgesetzt.

Diese Umsetzung wird im allgemeinen in Gegenwart oder Abwesenheit einer organischen oder anorganischen Base in einem organischen Lösungsmittel durchgeführt.

Weitere geeignete Herstellungsmethoden sind in der britischen Patentschrift Nr. 1 265 676 beschrieben.

Die erfindungsgemässen Zusammensetzungen können eine für die Härtung ausreichende Menge an Harnstoff (b) enthalten. In diesem Falle wird die Komponente (b) im allgemeinen in einer Menge von 5-30, bevorzugt 10-25 Gewichtsteilen, bezogen auf 100 Gewichtsteile des Epoxidharzes (a), eingesetzt.

Die Heisshärtung der Epoxidharze mit den Harnstoffen der Formel VI kann durch verschiedene Beschleuniger gefördert werden. Die Erfindung betrifft daher auch heisshärtbare Zusammensetzungen enthaltend (a) und (b) sowie

(c) eine kleinere Gewichtsmenge, bezogen auf das Gewicht von (b), eines Beschleunigers für die Heisshärtung, ausgewählt aus Dicyandiamid, Carbonsäurehydraziden, Succinimid, Cyanacetamid, 1-Cyan-3-(nieder-alkyl)guanidinen mit bis zu 3 C-Atomen in den Alkylgruppen, Imidazonen und Salzen von Carbonsäuren mit tertiären Aminen, wobei die Summe aus (b) und (c) die für die Heisshärtung des Epoxidharzes (a) ausreichende Menge darstellt. Zweckmässigerweise beträgt die Summe aus (b) und (c) 10-25 Gewichtsteile, bezogen auf 100 Gewichtsteile (a).

Es wurde auch gefunden, dass Harnstoffe der Formel VI die Heisshärtung von Epoxidharzen mit bestimmten anderen Verbindungen beschleunigen. Gegenstand der Erfindung sind somit auch erfindungsgemässe heisshärtbare Zusammensetzungen, die zusätzlich

(d) eine grössere Menge, bezogen auf das Gewicht von (b), eines Härtungsmittels für Epoxidharze, ausgewählt aus Dicyandiamid, Melamin, Carbonsäurehydraziden, Succinimid, Cyanacetamid, 1-Cyan-3-(nieder-alkyl)guanidinen mit bis zu 3 C-Atomen in den Alkylgruppen, Imidazolen und Salzen von Carbonsäure mit tertiären Aminen enthalten, wobei die Summe aus (d) und (b) die für die Heisshärtung der Epoxidharze (a) ausreichende Menge darstellt. Zweckmässig beträgt die Summe aus (d) und (b) 10-25 Gewichtsteile, bezogen auf 100 Gewichtsteile (a).

Als Epoxidharze werden in den erfindungsgemässen Zusammensetzungen bevorzugt solche verwendet, die mindestens zwei direkt an Sauerstoff-, Stickstoff- oder Schwefelstoffatome gebundene Gruppen der Formel XIII

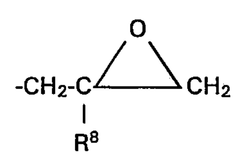

(XIII)

enthalten, wobei $R^8$ ein Wasserstoffatom oder eine Methylgruppe darstellt.

Als Beispiele von solchen Harzen seien genannt: Polyglycidyl- und Poly(β-methylglycidyl)ester, erhältlich durch Umsetzung von Verbindungen mit

zwei oder mehr Carbonsäuregruppen pro Molekül mit Epichlorhydrin, Glycerindichlorhydrin oder β-Methylepichlorhydrin in Gegenwart von Alkali. Solche Polyglycidylester können von aliphatischen Polycarbonsäuren, z.B. Oxalsäure, Bernsteinsäure, Glutarsäure, Adipinsäure, Pimelinsäure, Suberinsäure, Azelainsäure, Sebacinsäure, dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, oder von aromatischen Polycarbonsäuren, wie Phthalsäure, Isophthalsäure und Terephthalsäure, abgeleitet sein.

Weitere Beispiele sind Polyglycidyl- und Poly(β-methylglycidyl)-ehter, erhältlich durch Umsetzung von Verbindungen mit mindestens zwei freien alkoholischen Hydroxylgruppen und/oder phenolischen Hydroxylgruppen pro Molekül mit geeigneten Epichlorhydrinen unter alkalischen Bedingungen oder aber in Gegenwart von sauren Katalysatoren, gefolgt von einer Behandlung mit Alkali. Solche Ether können aus acyclischen Alkoholen, wie Ethylenglykol, Diethylenglykol und höheren Poly(oxyethylen)-glykolen, Propan-1,2-diol und Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylpropan, Pentaerythrit, Sorbit und Polyepichlorhydrinen von cycloaliphatischen Alkoholen, wie 1,3- und 1,4-Cyclohexandiol, Bis(4-hydroxycyclohexyl)-methan, 2,2-Bis-(4-hydroxycyclohexyl)propan und 1,1-Bis-(hydroxymethyl)-cyclohex-3-en, sowie von Alkoholen mit aromatischen Kernen, wie N,N-Bis-(2-hydroxyethyl)anilin und p,p'-Bis-(2-hydroxymethylamino)diphenylmethan, abgeleitet sein. Sie können sich auch von einkernigen Phenolen, wie Resorcin und Hydrochinon, und von mehrkernigen Phenolen, wie Bis-(4-hydroxyphenyl)methan, 4,4'-Dihydroxydiphenyl, Bis-(4-hydroxyphenyl)sulfon, 1,1,2,2-Tetrakis-(4-hydroxyphenyl)ethan, 2,2-Bis-(4-hydroxyphenyl)propan, 2,2-Bis-(3,5-dibrom-4-hydroxyphenyl)propan und Novolaken aus Aldehyden, wie Formaldehyd, Acetaldehyd, Chloral und Furfurylaldehyd, und Phenolen, wie dem unsubstituierten Phenol und Phenolen, die im Ring durch Chloratome oder Alkylgruppen mit bis zu 9 C-Atomen substituiert sind, wie 4-Chlorphenol, 2-Methylphenyol und 4-tert-Butylphenol, ableiten.

Beispiele von Poly(N-glycidyl)verbindungen sind Verbindungen, die durch Dehydrochlorierung von Umsetzungsprodukten aus Epichlorhydrin und Aminen mit mindestens zwei Aminwasserstoffatomen erhalten werden, wie Anilin-, n-Butylamin, Bis-(4-aminophenyl)-methan, m-Xylylendiamin und Bis-(4-methylaminophenyl)methan; Triglycidylisocyanurat und N,N'-Diglycidylderivate von cyclischen Alkylenharnstoffen, wie Ethylenharnstoff und 1,3-Propylenharnstoff, sowie Hydantoine, wie 5,5-Dimethylhydantoin.

Beispiele von Poly(S-glycidyl)verbindungen sind die S-Glycidylderivate von Dithiolen, wie Ethan-1,2-dithiol und Bis-(4-mercaptomethylphenyl)ether.

Es können auch Epoxidharze verwendet werden, bei denen die 1,2-Epoxidgruppen an verschiedene Heteroatome gebunden sind, z.B. das N,N,O-Triglycidylderivat von 4-Aminophenol, der Glycidyletherglycidylester von Salicylsäure, N-Glycidyl-N'-(2-glycidyloxypropyl)-5,5-dimethylhydantoin und 2-Glycidyloxy-1,3-bis(5,5-dimethyl-1-glycidylhydantoin-3-yl)propan.

Gewünschtenfalls können auch Gemische verschiedener Epoxidharze verwendet werden.

Bevorzugte Epoxidharze sind Polyglycidylether, Polyglycidylester, N,N'-Diglycidylhydantoine und Poly(N-glycidyl)derivate von aromatischen Aminen. Besonders bevorzugte Harze sind Polyglycidylether von 2,2-Bis-(4-hydroxyphenyl)propan oder Bis-(4-hydroxyphenyl)methan, sowie Polyglycidylether von Novolaken aus Formaldehyd und Phenol oder Phenolen, die im Ring durch ein Chloratom oder eine Alkylgruppe mit bis zu 9 C-Atomen substituiert sind, mit einem 1,2-Epoxidgehalt von mindestens 0,5 Äquivalenten/kg, Bis[4-(diglycidylamino)phenyl]-methan und p-(Diglycidylamino)phenylglycidylether.

Ist der Beschleuniger (c) oder das Haupthärtungsmittel (d) ein Carbonsäurehydrazid, so handelt es sich bevorzugt um Stearinsäurehydrazid, Oxalsäuredihydrazid, Adipinsäuredihydrazid, Sebacinsäuredihydrazid oder Isophthalsäuredihydrazid.

Ist der Beschleuniger (c) oder das Haupthärtungsmittel (d) ein 1-Cyan-3-(nieder-alkyl)guanidin, so handelt es sich vorzugsweise um die 3-Methyl-, 3,3-Dimethyl- oder 3,4-Diethylverbindung.

Werden als Beschleuniger (c) oder als Haupthärtungsmittel (d) Imidazole verwendet, so kommen bevorzugt 2-Phenylimidazol, N-Methylimidazol oder 2-Ethyl-4-methylimidazol in Betracht.

Werden als Beschleuniger (c) oder als Haupthärtungsmittel (d) Salze von Carbonsäuren mit tertiären Aminen eingesetzt, so handelt es sich bevorzugt um Salze einer Hydroxycarbonsäure, wie Milchsäure oder Salicylsäure, mit einer Mannich-Base, wie 2,4,6-Tris-(dimethylaminomethyl)phenol.

Der Beschleuniger (c) liegt im allgemeinen in einer Menge von 10-50 Gewichtsteilen pro 100 Gewichtsteile des Harnstoffs (b) vor. Werden die Harnstoffe (b) als Beschleuniger für die Härtungsmittel (d) eingesetzt, so liegen sie zweckmässig in Mengen von 25 bis 75 Gewichtsteilen pro 100 Gewichtsteile (d) vor.

Die härtbaren Zusammensetzungen können auch geeignete Weichmacher, wie Dibutylphthalat und Dioctylphthalat, inerte Verdünnungsmittel, wie Teere und Bitumen, und sogenannte reaktive Verdünner, besonders Monoepoxide, wie n-Butylglycidylether, Iso-octylglycidylether, Phenylglycidylether, Kresylglycidylether, Glycidylester von gemischten tertiären aliphatischen Monocarbonsäuren, Glycidylacrylate und Glycidylmethacrylate, enthalten. Sie können ferner übliche Zusätze, wie Füllstoffe, Verstärkerfüllstoffe, die Zähigkeit verbessernde polymere Materialien, wie Polyethersulfone, Phenoxyharze und Butadien-acrylnitril-Kautschuke, farbgebende Mittel, Fliessmittel, flammhemmende Substanzen und Entformungsmittel enthalten. Geeignete Füllstoffe sind z.B. Glasfasern, Kohlefasern, Fasern aus aromatischen Polyamiden, sogenannte Ballotini, Glimmer, Quarzmehl, Calciumcarbonat, Cellulose, Kaolin, Wollastonit, kolloidale Kieselsäure mit grosser spezifischer Oberfläche, pulverförmige Poly(vinylchlorid) und pulverförmige Polyolefine, wie Polyethylen und Polypropylen. Die erfindungsgemässen härtbaren Zusammensetzungen können als Laminierharze, Imprägnier- und Giessharze, als Pulverbeschichtungsmassen, Pressmassen, Kitte und Dichtungsmassen, Umhüllungs- und Isoliermassen für die Elektroindustrie und besonders als Klebstoffe und Grundierungsmittel für Klebstoffe verwendet werden.

Die erfindungsgemässen Zusammensetzungen werden bevorzugt durch Erhitzen auf Temperaturen zwischen 100 und 180°C, besonders 200 und 130°C, gehärtet. Im allgemeinen genügt für das Aushärten ein Erhitzen während 30 bis 120 Minuten.

Die Erfindung wird durch die folgenden Beispiele erläutert. Teile sind Gewichtsteile.

Die in den Beispielen verwendeten Harnstoffe werden wie folgt hergestellt:

*Herstellung 1*

Eine Lösung von 44 g Phosgen in 250 ml trockenem Ethylacetat wird während der tropfenweisen Zugabe einer Lösung von 22,6 g Methylanthranilat in 75 ml trockenem Ethylacetat bei Raumtemperatur gerührt, und das Ethylacetat wird zusammen mit überschüssigem Phosgen destillativ entfernt. Der Destillationsrückstand enthält 2-Carboxymethylphenylisocyanat. Dieses wird unter Stickstoff in 100 ml trockenem Toluol gelöst. Man gibt tropfenweise eine Lösung von 50 ml Dimethylamin (28,8% Dimethylamin) in Toluol hinzu und hält die Temperatur unter 30°C. Das Toluol und überschüssiges Dimethylamin werden anschliessend unter vermindertem Druck verdampft, und das Rohprodukt wird aus 300 ml Petrolether (Siedebereich 60-80°C) umkristallisiert. Man erhält 21,2 g N-(2-Methoxycarbonylphenyl)-N',N'-dimethylharnstoff; Smp. 85-90°C.

20 g dieses Esters werden während 5 Tagen bei Raumtemperatur mit 500 ml wässrigem Ammoniak (35% $NH_3$) gerührt. Es bildet sich ein Feststoff, der abfiltriert wird. Nach dem Umkristallisieren aus Petrolether (Siedebereich 60-80°C) erhält man den N-(2-Carboxamidophenyl)-N',N'-dimethylharnstoff; Smp. 185°C (Zersetzung).

*Herstellung 2*

Eine Lösung von 20,8 g Phosgen in 300 ml trockenem Ethylacetat wird während der tropfenweisen Zugabe von 20 g 2-Amino-5-nitrobenzonitril in 100 ml trockenem Ethylacetat bei Raumtemperatur gerührt. Nach beendeter Zugabe wird das Gemisch 2 Stunden auf 60°C und dann 2 Stunden auf 75°C erhitzt. Anschliessend wird das Gemisch mit Stickstoff gespült, um einen Teil des Phosgens zu entfernen; das restliche Phosgen und das Ethylacetat werden bei Atmosphärendruck destillativ entfernt. Der Rückstand wird in trockenem Toluol gelöst und durch Zugabe einer Lösung von Dimethylamin in Toluol knapp basisch gestellt. Der Feststoff wird abfiltriert. Man erhält 22,3 g rohen N-(2-Cyan-4-nitrophenyl)-N'-N'-dimethylharnstoff. Nach dem Umkristallisieren dieses Produkts aus Toluol erhält man ein Produkt mit Smp. 184°C.

3,05 g des umkristallisierten Produkts werden in 16 ml Aceton gerührt. Dann gibt man tropfenweise 26 ml Wasserstoffperoxid hinzu, wobei das Gemisch durch Zugabe von 2 N wässriger Natriumhydroxidlösung bei pH 8-9 und bei 10-20°C gehalten wird. Man lässt das Gemisch 16 Stunden stehen und gibt noch einmal 30 ml Aceton und danach 13 ml Wasserstoffperodix zu. Man rührt noch 2 Stunden und versetzt mit 100 ml Wasser. Der ausgefallene Feststoff wird abfiltriert, mit Wasser gewaschen und bei 65°C im Vakuum getrocknet. Man erhält 3,05 g N-(2-Carboxamido-4-nitrophenyl)-N'-N'-dimethylharnstoff; Smp. 220°C (Zersetzung).

*Herstellung 3*

Eine Lösung von 17 g Phosgen in 300 ml trockenem Ethylacetat wird während der tropfenweisen Zugabe von 15 g 2-Amino-5-chlorbenzoesäuremethylester in 100 ml trockenem Ethylacetat bei Raumtemperatur gerührt. Das Gemisch wird 1,5 Stunden bei Raumtemperatur gerührt und dann während 1,5 Stunden unter Rückfluss erhitzt. Bei 70-80°C wird das Gemisch mit Stickstoff gespült, um einen Teil des überschüssigen Phosgens zu entfernen; das restliche Phosgen wird zusammen mit dem Ethylacetat bei Atmosphärendruck destillativ entfernt.

Der Destillationsrückstand wird mit 100 ml trockenem Toluol versetzt, und der pH des Gemisches wird durch tropfenweise Zugabe einer Lösung von 22 g Dimethylamin (28,8% Dimethylamin) in Toluol auf 8 eingestellt. Man lässt das Gemisch bei Raumtemperatur 16 Stunden stehen und filtriert anschliessend.

Nach dem Verdampfen des Filtrats erhält man 19,5 g N-(2-Methoxycarbonyl-4-chlorphenyl)-N',N'-dimethylharnstoff; Smp. 114°C.

10 g dieses Esters werden mit 115 ml wässrigem Ammoniak (35% $NH_3$) vermischt und 4 Tage bei Raumtemperatur gerührt. Der entstandene Feststoff wird abfiltriert und mit Wasser gewaschen. Dann wird er mit Toluol gewaschen und bei Atmosphärendruck und Raumtemperatur getrocknet. Nach dem Umkristallisieren aus Ethanol erhält man 4,05 g N-(2-Carboxamido-4-chlorphenyl)-N',N'-dimethylharnstoff; Smp. 210°C (Zersetzung).

*Herstellung 4*

Eine Lösung von 27,1 g HCl in 192,2 g Methanol wird bei Raumtemperatur gerührt und mit 25 g 2-Amino-4-chlorbenzoesäure versetzt. Das Gemisch wird 10 Stunden unter Rückfluss erhitzt, dann abgekühlt und mit einer Lösung von 20 g Natriumcarbonat in 200 ml Wasser neutralisiert. Der Feststoff wird abfiltriert, mit Wasser gewaschen und im Vakuum bei 65°C getrocknet. Man erhält 15,5 g 2-Amino-5-chlorbenzoesäuremethylester.

15 g dieses Esters werden in 100 ml trockenem Ethylacetat gelöst. Die Lösung wird tropfenweise zu einer Lösung von 12,7 g Phosgen in 300 ml trockenem Ethylacetat gegeben und dann 1 Stunde unter Rückfluss erhitzt. Das rückflussierende Gemisch wird mit Stickstoff gespült, um einen Teil des Phosgens zu entfernen; das restliche Phosgen wird zusammen mit dem Ethylaçetat durch Verdampfen unter vermindertem Druck entfernt. Der Rückstand ist ein braunes Öl, das beim Stehenlassen kristallisiert. Es wird in 100 ml trockenem Toluol gelöst, und der pH wird durch Zugabe einer Lösung von 2,6 g Dimethylamin (28,2% Dimethylamin) in Toluol auf 8 eingestellt. Der Feststoff wird abfiltriert. Nach dem Verdampfen des Filtrats erhält man 18 g N-(2-Methoxycarbonyl-5-chlorphenyl)-N',N'-dimethylharnstoff; Smp. 99°C.

5,95 g dieses Esters werden bei Raumtemperatur 4 Tage mit einer Lösung von 10,6 Ammoniak in 100 ml Methanol gerührt. Der Feststoff wird abfiltriert und aus Methanol umkristallisiert. Man erhält 1,6 g N-(2-Carboxamido-5-chlorphenyl)-N',N'-dimethylharnstoff; Smp. 192°C (Zersetzung).

*Herstellung 5*

Eine Lösung von 16,3 g Phosgen in 300 ml trockenem Ethylacetat wird bei Raumtemperatur gerührt und tropfenweise mit einer Lösung von 16,5 g 2-Methoxycarbonyl-4-methylanilin in 100 ml trockenem Ethylacetat versetzt. Nach Beendigung der Zugabe wird das Gemisch 1 Stunde unter Rückfluss erhitzt, worauf man den grösseren Teil des Phosgens durch Spülen mit Stickstoff entfernt. Das restliche Phosgen wird zusammen mit dem Ethylacetat im Vakuum entfernt. Der Rückstand wird in 100 ml Toluol gelöst und mit einer Lösung von 16,0 g Dimethylamin (28,8% Dimethylamin) in Toluol versetzt, wobei die Temperatur während der Zugabe unter 30°C gehalten wird. Das Gemisch wird filtriert, und das Filtrat wird verdampft. Man erhält ein Öl, das bei Abkühlen kristallisiert. Dieses Öl wird aus Petrolether (Siedebereich 60-80°C) umkristallisiert. Man erhält N-(2-Methoxycarbonyl-4-methylphenyl)-N',N'-dimethylharnstoff; Smp. 92°C.

15 g dieses Esters werden bei Raumtemperatur 7 Tage mit 400 ml 35%igem wässrigem Ammoniak gerührt. Der entstandene Feststoff wird abfiltriert, mit Wasser gewaschen und aus Ethanol umkristallisiert. Man erhält 3,3 g N-(2-Carboxyamido-4-methylphenyl)-N',N'-dimethylharnstoff vom Smp. 191°C (Zersetzung).

*Herstellung 6*

Eine Lösung von 26,4 g Phosgen in 300 ml trockenem Ethylacetat wird bei 10°C gerührt und während 30 Minuten tropfenweise mit einer Lösung von 22 g 2-Aminobenzosäuremethylester in 100 ml trockenem Ethylacetat versetzt. Das Gemisch wird unter langsamem Spülen mit Stickstoff 1 Stunde unter Rückfluss erhitzt. Das Erhitzen wird unterbrochen, und der Stickstoffstrom wird verstärkt. Nach einer weiteren Stunde wird das Gemisch verdampft, und der Rückstand wird in Toluol gelöst. Zu dieser Lösung gibt man bei pH 7-8 eine Lösung von 35,5 g Dimethylamin (28,8% Dimethylamin) in Toluol. Das Gemisch wird filtriert, und das Filtrat wird verdampft. Man erhält 30,5 g N-(3-Methoxycarbonylphenyl)-N',N'-dimethylharnstoff vom Smp. 110°C.

15,0 g dieses Esters werden bei Raumtemperatur während 4 Tagen mit 200 ml 35%igem wässrigem Ammoniak gerührt. Das Gemisch wird filtriert, und der Rückstand wird mit Wasser gewaschen und getrocknet. Nach dem Umkristallisieren aus Ethanol erhält man 4,0 g N-(3-Carboxamidophenyl)-N',N'-dimethylharnstoff vom Smp. 220°C.

*Herstellung 7*

10 g 4-Aminobenzamid in 75 ml Dioxan und 14,8 g Triethylamin werden bei 40°C gerührt. Während 20 Minuten gibt man tropfenweise 15,8 g Dimethylcarbamoylchlorid zu. Nach Beendigung der Zugabe wird das Gemisch 40 Stunden auf 60°C erhitzt. Man gibt 350 ml Wasser zu und rührt das Gemisch weitere 2 Stunden bei Raumtemperatur. Der Feststoff wird abfiltriert, mit Wasser gewaschen, und das Filtrat wird im Vakuum verdampft. Der Rückstand wird in 70 ml Wasser suspendiert, abfiltriert und mit Wasser gewaschen. Man erhält 3,0 g N-(4-Carboxamidophenyl)-N',N'-dimethylharnstoff vom Smp. 240°C (Zersetzung).

*Herstellung 8*

5,0 g des gemäss Beispiel 1 erhaltenen N-(2-Methoxycarbonylphenyl)-N',N'-dimethylharnstoffs und 8,2 g n-Butylamin werden 16 Stunden bei 45-55°C zusammen gerührt. Der entstandene Feststoff wird abfiltriert und aus Petrolether (Siedebereich 60 bis 80°C) umkristallisiert. Man erhält 0,8 g (N-[2-(N''-Butylcarboxamido)phenyl]-N',N'-dimethylharnstoff vom Smp. 106°C.

*Herstellung 9*

5,0 g des gemäss Beispiel 1 erhaltenen N-(2-Methoxycarbonylphenyl)-N',N'-dimethylharnstoffs und 25 ml 25% wässriges Methylamin werden 2,5 Stunden bei 45-50°C gerührt und dann verdampft. Der Rückstand wird aus Petrolether (Siedebereich 60 bis 80°C) umkristallisiert. Man erhält 0,6 g N-[2-(N''-Methylcarboxamido)phenyl]-N',N'-dimethylharnstoff vom Smp. 139°C.

*Herstellung 10*

Eine Lösung von 21,7 g 2-Methoxycarbonylphenylisocyanat in 116 g Ethylacetat wird tropfenweise zu 22,5 g N-Methylethanolamin zugegeben, während die Reaktionsmischung gerührt und auf eine Temperatur unterhalb von 36°C gekühlt wird. Die obere Schicht der erhaltenen Mischung wird abgetrennt, und unter vermindertem Druck wird bei 60°C das Ethylacetat destillativ entfernt. Die zurückbleibende weisse Festsubstanz wird mit Ether verrieben, filtriert und mit Ether gewaschen. Nach dem Trocknen an der Luft erhält man 22,4 g N-(2-Methoxycarbonyl-phenyl)-N',methyl-N'-(2-hydroxyethyl)-harnstoff; Smp. 90°C.

10 g dieser Verbindung werden zu einer Lösung von 19,5 g Ammoniak in Methanol gegeben. Die Mischung wird bis zum vollständigen Auflösen gerührt und danach 21 Tage bei Raumtemperatur stehen gelassen, dann wird das Methanol unter vermindertem Druck bei 50°C destillativ entfernt. Die erhaltene Festsubstanz wird mit Ether verrieben, filtriert und mit Ether gewaschen. Man erhält 8,3 g eines Rohprodukts mit einem Smp. von 126°C (Zersetzung). Nach dem Waschen mit Wasser und Umkristallisieren aus einer aus Isopropanol und Petrolether bestehenden Mischung (Siedebereich 60-80°C) werden 5,6 g reiner N-(2-Carboxamidophenyl)-N',methyl-N'-(2-hydroxyethyl)-harnstoff erhalten; Smp. 134°C (Zersetzung).

*Herstellung 11*

Eine Mischung aus 20 g N-(2-Methoxycarbonylphenyl)-N',N'-dimethylharnstoff (hergestellt gemäss Herstellung 1), 50 ml Ethanolamin und 50 ml Methanol wird 10 Stunden bei 45-50°C gerührt. Nach dem Kühlen wird Diethylether zugegeben, wobei sich ein Öl abscheidet. Das Öl wird dreimal mit Ether gewaschen und dann 2 Tage in Ether stehen gelassen. Die entstandenen Kristalle werden abfiltriert, mit Ether und dann mit einer aus Isopropanol und Petrolether bestehenden Mischung (Siedebereich 60-80°C) gewaschen. Nach dem Trocknen an der Luft erhält man 8,85 g eines Produkts mit einem Smp. von 140°C (Zersetzung). Das Produkt wird weiter gereinigt durch Waschen mit Isopropanol und Petrolether. Nach dem Trocknen erhält man 7,8 g N-[2-(N''-(2-Hydroxyethyl)-carboxamido)phenyl]-N,N'--dimethylharnstoff; Smp. 134°C (Zersetzung).

«Epoxidharz I» ist ein Polyglycidylether von 2,2-Bis(4-hydroxy phenyl)propan mit einem Epoxidgehalt von 5,16 Äquivalenten/kg und einer Viskosität von 24,5 Pa s bei 21°C.

«Epoxidharz II» ist N,N,N',N'-Tetraglycidyl-bis-(4--aminophenyl)-methan mit einem Epoxidgehalt von 7,8-8,2 Äquivalenten/kg.

*Beispiel 1*

Aus 100 Teilen Epoxidharz I, 15 Teilen N-(2-Carboxamidophenyl)-N',N'-dimethylharnstoff, 25 Teilen Aluminiumpulver, das ein 200 Mesh-Sieb passiert (British Standard 410) und 5 Teilen eines Thioxtropiermittels auf der Basis von fein verteiltem Quarz wird durch Vermengen in einem Dreiwalzenstuhl ein Gemisch hergestellt. Mit diesem Gemisch werden unter der Bezeichnung «2L 73 Alclad»® erhältliche entfettete und gebeizte Bleche aus einer Aluminiumlegierung an den Enden verklebt (Klebestellen 2,54 × 1,27 cm). Das Gemisch wird während 1 Stunde bei 120°C gehärtet. Die Scherfestigkeit der Verklebung beträgt 30,3 MPa.

*Beispiel 2*

Durch Vermengen auf einem Dreiwalzenstuhl werden Gemische A bis I hergestellt und deren Gelierzeit bestimmt, indem man etwa 0,1 g jeder Mischung bei der angegebenen Temperatur auf einem Metallblock aufbringt und die Zeit bis zur Gelierung bestimmt. Die Zusammensetzungen der Mischungen sind in Tabelle I angegeben, die Gelierzeiten in Tabelle II.

TABELLE I

| Komponente | Gemisch | | | | | | | | |
|---|---|---|---|---|---|---|---|---|---|
| | A | B | C | D | E | F | G | H | I |
| N-(2-Carboxamidophenyl-N',N',-dimethylharnstoff | 15 | | | | | | | | 4,5 |
| N-(3-Carboxamidophenyl)-N',N'-dimethylharnstoff | | 15 | | | | | | | |
| N-(4-Carboxamidophenyl)-N',N'-dimethylharnstoff | | | 15 | | | | | | |
| N-(2-Carboxamido-4-chlor-phenyl)-N',N'-dimethyl-harnstoff | | | | 17,5 | | | | 10 | |
| N-(2-Carboxamido-5-chlor-phenyl)-N',N'-dimethyl-harnstoff | | | | | 17,5 | | | | |
| N-(2-Carboxamido-4-nitro-phenyl)-N',N'-dimethyl-harnstoff | | | | | | 18,2 | | | |
| N-(2-Carboxamido-4-methyl-phenyl)-N',N'-dimethyl-harnstoff | | | | | | | 16 | | |
| Dicyandiamid | | | | | | | | 4 | 7 |
| Epoxidharz I | 100 | 100 | 100 | 100 | 100 | 100 | 100 | 100 | 100 |
| Thixotropiermittel auf der Basis von Asbest | 5 | 5 | 5 | 5 | 5 | 5 | 5 | 5 | 5 |

TABELLE II

| Gemisch | Gelierzeit bei | | | | | | | |
|---|---|---|---|---|---|---|---|---|
| | 180°C | 170°C | 150°C | 140°C | 130°C | 120°C | 100°C | 40°C |
| A | | | | | | 12 min | 41 min | 17 Wochen |
| B | | | | | | 43 min | | 16 Wochen |
| C | | 6 min | 12 min | | | 85 min | | 1 Jahr |
| D | 3 min | | 3 min | 4 min | 8 min | 15,5 min | | 15 Wochen |
| E | | | | | | 10 min | | 4 Wochen |
| F | 2 min | | 5 min | | | 43 min | | 11 Wochen |
| G | | | | | | 16,5 min | | 7 Wochen |
| G | | | | | | 14 min | | 19 Wochen |
| I | | | | | | 20 min | | 10 wochen |

*Beispiel 3*

Auf einem Dreiwalzenstuhl wird ein Gemisch aus 100 Teilen Epoxidharz I, 19 Teilen N-[2-(n''-Butylcarboxamido)phenyl]-N',N'-dimethylharnstoff und 5 Teilen eines Thixotropiermittels auf der Basis von Asbest zubereitet. Dieses Gemisch ist bei 40°C während 10 Wochen stabil. Die Gelierzeiten dieses Gemisches werden wie in Beispiel 2 beschrieben bei verschiedenen Temperaturen gemessen:

120°C - 35 Minuten
130°C - 22 Minuten
150°C - 18 Minuten.

*Beispiel 4*

Beispiel 3 wird wiederholt, jedoch unter Verwendung von 16 Teilen N-[2-(N''-Methylcarboxamido)-phenyl]-N',N'-dimethylharnstoff. Das Gemisch ist bei 40°C während 9 Wochen stabil, und es geliert bei 120°C nach 21,5 Minuten.

*Beispiel 5*

Aus 100 Teilen Epoxidharz I, 17,1 Teilen N-(2-Carboxamidophenyl)-N'-methyl-N'-(2-hydroxyethyl)-harnstoff und 5 Teilen eines Thixotropiermittels auf Basis von Asbest wird durch Vermischen auf einem Dreiwalzenstuhl ein Gemisch hergestellt. Dieses Gemisch ist bei 40°C während 30 Tagen stabil. Die Gelierzeit des Gemisches beträgt nach der Messmethode von Beispiel 2 bei 120°C 22 Minuten.

*Beispiel 6*

Beispiel 5 wird wiederholt, jedoch unter Verwendung von 18 Teilen N-[2-(N''-(2-Hydroxyethyl)carboxamido)phenyl]-N',N'-dimethylharnstoff. Das Gemisch ist bei 40°C während 4 Wochen stabil und geliert bei 100°C nach 19 Minuten und bei 120°C nach $5^3/_4$ Minuten.

*Beispiel 7*

Aus 100 Teilen Epoxidharz II und 23 Teilen N-(2-Carboxamidphenyl)-N',N'-dimethylharnstoff wird durch Vermengen auf einem Dreiwalzenstuhl ein Gemisch hergestellt. Dieses Gemisch ist bei 40°C während 31 Tagen stabil. Die Gelierzeiten des Gemisches werden wie in Beispiel 2 beschrieben bei verschiedenen Temperaturen gemessen

120°C - 11 Minuten
140°C - 2,75 Minuten.

*Beispiel 8*

Beispiel 7 wird wiederholt, jedoch unter Verwendung von 15 Teilen anstelle 23 Teilen der Harnstoffverbindung. Das Gemisch ist bei 40°C während 31 Tagen stabil. Die Gelierzeiten des Gemisches sind folgende:

120°C - 12,5 Minuten
140°C - 3 Minuten.

**Patentansprüche für die Vertragsstaaten:**
BE, CH, DE, FR, GB, IT, LI, NL, SE

1. Heisshärtbare Zusammensetzungen enthaltend
(a) ein Epoxidharz und
(b) eine wirksame Menge eines Harnstoffs der Formel VI

$$Ar\text{-}NHCON(R^3)R^4 \quad (VI),$$

worin

Ar eine durch eine Amidogruppe substituierte aromatische Gruppe darstellt, die über ein aromatisches Kohlenstoffatom an das in der Formel angegebene Stickstoffatom gebunden ist,

$R^3$ und $R^4$ je einen aliphatischen, cycloaliphatischen oder araliphatischen Kohlenwasserstoffrest darstellt, der unsubstituiert oder durch ein Halogenatom oder eine Hydroxylgruppe substituiert sein kann, mit der Massgabe, dass $R^3$ auch ein Wasserstoffatom bedeuten kann, oder $R^3$ und $R^4$ zusammen mit dem in Formel VI angegebenen Stickstoffatom einen im Ring 3-5 C-Atome und gegebenenfalls ein Sauerstoffatom enthaltenden heterocyclischen Ring bilden.

2. Zusammensetzung nach Anspruch 1, worin Ar ein durch eine Amidogruppe substituierte Phenylgruppe darstellt, die weiter durch ein oder mehrere

Halogenatome, Amino- oder Nitrogruppen oder Alkylgruppen mit 1-10 C-Atomen substituiert sein kann.

3. Zusammensetzung nach Anspruch 1 oder 2, worin (b) ein Amidophenylharnstoff der Formel VII

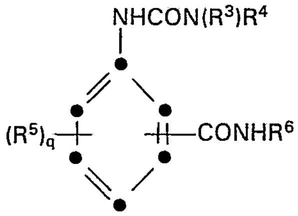

(VII)

ist, worin $R^3$ und $R^4$ die im Anspruch 1 angegebene Bedeutung haben,

$R^5$ ein Halogenatom, eine Amino- oder Nitrogruppe oder eine Alkylgruppe mit 1-10 C-Atomen,

$R^6$ ein Wasserstoffatom oder eine unsubstituierte oder durch eine Hydroxylgruppe substituierte Alkylgruppe mit 1-10 C-Atomen und

q Null, 1 oder 2 bedeuten.

4. Zusammensetzung nach einem der vorhergehenden Ansprüche, worin $R^3$ und $R^4$ je eine Alkylgruppe mit 1-6 C-Atomen, eine Hydroxyalkylgruppe mit 2-4 C-Atomen, eine Cycloalkylgruppe mit 3-7 C-Atomen oder eine Aralkylgruppe mit 7-9 C-Atomen bedeuten.

5. Zusammensetzung nach Anspruch 4, worin $R^3$ und $R^4$ je eine Methylgruppe oder $R^3$ eine Methylgruppe und $R^2$ eine 2-Hydroxyethylgruppe bedeuten.

6. Zusammensetzung nach einem der Ansprüche 3 bis 5, worin q Null oder 1 und $R^5$ $-NO_2$, -Cl oder eine Methylgruppe bedeuten.

7. Zusammensetzung nach einem der Ansprüche 3 bis 6, worin $R^6$ ein Wasserstoffatom, eine Alkylgruppe mit 1-6 C-Atomen oder eine Hydroxyalkylgruppe mit 2-4 C-Atomen bedeutet.

8. Zusammensetzung nach einem der vorhergehenden Ansprüche, worin

(b) N-(2-Carboxamidophenyl)-N',N'-dimethylharnstoff, N-(3-Carboxamidophenyl)-N',N'-dimethylharnstoff, N-(4-Carboxamidophenyl)-N',N'-dimethylharnstoff, N-(2-Carboxamido-4-chlorphenyl)-N',N'-dimethylharnstoff, N-2-Carboxamido-4--nitrophenyl)-N',N'-dimethylharnstoff, N-(2-Carboxamido-4-methylphenyl)-N',N'-dimethylharnstoff, N-[2-(N''-Methylcarboxamido)phenyl]-N',N'-dimethylharnstoff, N-[2-(N''-Butylcarboxamido)phenyl]-N',N'-dimethylharnstoff, N-(2-Carboxamidophenyl)-N'-methyl-N'-(2-hydroxyethyl)-harnstoff oder N-[2-(N''-(2-hydroxyethyl)-carboxamido)-phenyl]-N',N'-dimethylharnstoff ist.

9. Zusammensetzung nach einem der vorhergehenden Ansprüche, die zusätzlich

(c) eine geringere Gewichtsmenge, bezogen auf das Gewicht von (b), eines Beschleunigers für die Heisshärtung, ausgewählt aus Dicyandiamid, Carbonsäurehydraziden, Succinimid, Cyanacetamid, 1-Cyan-3-(nieder-alkyl)guanidinen mit bis zu 3 C-Atomen in den Alkylgruppen, Imidazolen und Salzen von Carbonsäuren mit tertiären Aminen enthält, wobei die Summe aus (b) und (c) die für die Heisshärtung des Epoxidharzes (a) ausreichende Menge darstellt.

10. Zusammensetzung nach einem der Ansprüche 1 bis 8, die zusätzlich

(d) eine grössere Menge, bezogen auf das Gewicht von (b), eines heisshärtdenden Mittels für Epoxidharze ausgewählt aus Dicyandiamid, Melamin, Carbonsäurehydraziden, Succinimid, Cyanacetamid, 1-Cyan-3-(nieder-alkyl)guanidinen mit bis zu 3 C-Atomen in den Alkylgruppen, Imidazolen und Salzen von Carbonsäuren mit tertiären Aminen enthält, wobei die Summe aus (d) und (c) die für die Heisshärtung des Epoxidharzes (a) ausreichende Menge darstellt.

11. Zusammensetzung nach einem der vorhergehenden Ansprüche, worin (a) ein Polyglycidylether, ein Polyglycidylester, ein N,N'-Diglycidylhydantoin oder ein Poly(N-glycidyl)derivat eines aromatischen Amins ist.

12. Vernetzte Produkte, die durch Heisshärtung einer Zusammensetzung nach einem der vorhergehenden Ansprüche erhalten werden.

**Patentansprüche für den Vertragsstaat:** AT

1. Heisshärtbare Zusammensetzungen enthaltend

(a) ein Epoxidharz und

(b) eine wirksame Menge eines Harnstoffs der Formel VI

$$Ar\text{-}NHCON(R^3)R^4 \quad (VI),$$

worin

Ar eine durch eine Amidogruppe substituierte aromatische Gruppe darstellt, die über ein aromatisches Kohlenstoffatom an das in der Formel angegebene Stickstoffatom gebunden ist,

$R^3$ und $R^4$ je einen aliphatischen, cycloaliphatischen oder araliphatischen Kohlenwasserstoffrest darstellt, der unsubstituiert oder durch ein Halogenatom oder eine Hydroxylgruppe substituiert sein kann, mit der Massgabe, dass $R^3$ auch ein Wasserstoffatom bedeuten kann, oder $R^3$ und $R^4$ zusammen mit dem in Formel VI angegebenen Stickstoffatom einen im Ring 3-5 C-Atome und gegebenenfalls ein Sauerstoffatom enthaltenden heterocyclischen Ring bilden.

2. Zusammensetzung nach Anspruch 1, worin Ar ein durch eine Amidogruppe substituierte Phenylgruppe darstellt, die weiter durch ein oder mehrere Halogenatome, Amino- oder Nitrogruppen oder Alkylgruppen mit 1-10 C-Atomen substituiert sein kann.

3. Zusammensetzung nach Anspruch 1 oder 2, worin (b) ein Amidophenylharnstoff der Formel VII

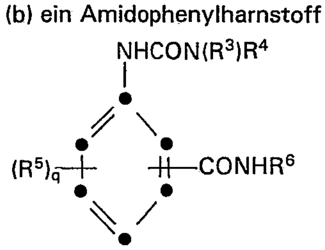

(VII)

ist, worin $R^3$ und $R^4$ die im Anspruch 1 angegebene Bedeutung haben,

$R^5$ ein Halogenatom, eine Amino- oder Nitrogruppe oder eine Alkylgruppe mit 1-10 C-Atomen,

$R^6$ ein Wasserstoffatom oder eine unsubstituierte oder durch eine Hydroxylgruppe substituierte Alkylgruppe mit 1-10 C-Atomen und

q Null, 1 oder 2 bedeuten.

4. Zusammensetzung nach einem der vorhergehenden Ansprüche, worin $R^3$ und $R^4$ je eine Alkylgruppe mit 1-6 C-Atomen, eine Hydroxyalkylgruppe mit 2-4 C-Atomen, eine Cycloalkylgruppe mit 3-7 C-Atomen oder eine Aralkylgruppe mit 7-9 C-Atomen bedeuten.

5. Zusammensetzung nach Anspruch 4, worin $R^3$ und $R^4$ je eine Methylgruppe oder $R^3$ eine Methylgruppe und $R^2$ eine 2-Hydroxyethylgruppe bedeuten.

6. Zusammensetzung nach einem der Ansprüche 3 bis 5, worin q Null oder 1 und $R^5$ $-NO_2$, -Cl oder eine Methylgruppe bedeuten.

7. Zusammensetzung nach einem der Ansprüche 3 bis 6, worin $R^6$ ein Wasserstoffatom, eine Alkylgruppe mit 1-6 C-Atomen oder eine Hydroxyalkylgruppe mit 2-4 C-Atomen bedeutet.

8. Zusammensetzung nach einem der vorhergehenden Ansprüche, worin

(b) N-(2-Carboxamidophenyl)-N',N'-dimethylharnstoff, N-(3-Carboxamidophenyl)-N',N'-dimethylharnstoff, N-(4-Carboxamidophenyl)-N',N'-dimethylharnstoff, N-(2-Carboxamido-4-chlorphenyl)-N',N'-dimethylharnstoff, N-2-Carboxamido-4--nitrophenyl)-N',N'-dimethylharnstoff, N-(2-Carboxamido-4-methylphenyl)-N',N'-dimethylharnstoff, N-[2-(N''-Methylcarboxamido)phenyl]-N',N'-dimethylharnstoff, N-[2-(N''-Butylcarboxamido)phenyl]-N',N'-dimethylharnstoff, N-(2-Carboxamidophenyl)-N'-methyl-N'-(2-hydroxyethyl)-harnstoff oder N-[2-(N''-(2-hydroxyethyl)-carboxamido)-phenyl]-N',N'-dimethylharnstoff ist.

9. Zusammensetzung nach einem der vorhergehenden Ansprüche, die zusätzlich

(c) eine geringere Gewichtsmenge, bezogen auf das Gewicht von (b), eines Beschleunigers für die Heisshärtung, ausgewählt aus Dicyandiamid, Carbonsäurehydraziden, Succinimid, Cyanacetamid, 1-Cyan-3-(nieder-alkyl)guanidinen mit bis zu 3 C-Atomen in den Alkylgruppen, Imidazolen und Salzen von Carbonsäuren mit tertiären Aminen enthält, wobei die Summe aus (b) und (c) die für die Heisshärtung des Epoxidharzes (a) ausreichende Menge darstellt.

10. Zusammensetzung nach einem der Ansprüche 1 bis 8, die zusätzlich

(d) eine grössere Menge, bezogen auf das Gewicht von (b), eines heisshärtenden Mittels für Epoxidharze ausgewählt aus Dicyandiamid, Melamin, Carbonsäurehydraziden, Succinimid, Cyanacetamid, 1-Cyan-3-(nieder-alkyl)guanidinen mit bis zu 3 C-Atomen in den Alkylgruppen, Imidazolen und Salzen von Carbonsäuren mit tertiären Aminen enthält, wobei die Summe aus (d) und (c) die für die Heisshärtung des Epoxidharzes (a) ausreichende Menge darstellt.

11. Zusammensetzung nach einem der vorhergehenden Ansprüche, worin (a) ein Polyglycidylether, ein Polyglycidylester, ein N,N'-Diglycidylhydantoin oder ein Poly(N-glycidyl)derivat eines aromatischen Amins ist.

**Claims for the Contracting States:**
BE, CH, DE, FR, GB,IT,LI, NL, SE

1. A heat-curable composition containing

(a) an epoxy resin and

(b) an effective amount of a urea of formula VI

$$Ar\text{-}NHCON(R^3)R^4 \qquad (VI),$$

in which

Ar represents an aromatic group which is linked through an aromatic carbon atom to the nitrogen atom indicated in the formula and is substituted by an amido group, and

$R^3$ and $R^4$ each represent an aliphatic, cycloaliphatic, or araliphatic hydrocarbon radical, which may be unsubstituted or substituted by a halogen atom or by a hydroxyl group, with the proviso that $R^3$ may also represent a hydrogen atom, or $R^3$ and $R^4$ together with the nitrogen atom indicated in formula VI form a heterocyclic ring containing 3 to 5 carbon atoms, and optionally one oxygen atom, in the ring.

2. A composition according to claim 1, in which Ar represents a phenyl group which is substituted by an amido group and may also be substituted by one or more halogen atoms, amino or nitro groups, or alkyl groups of 1 to 10 carbon atoms.

3. A composition according to claim 1 or 2, in which (b) is an amidophenylurea of formula VII

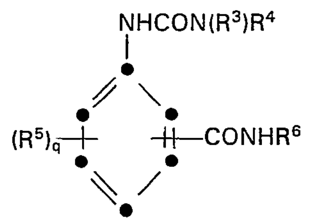

(VII),

in which $R^3$ and $R^4$ are as defined in claim 1,

$R^5$ denotes a halogen atom, an amino or nitro group or an alkyl group of 1 to 10 carbon atoms,

$R^6$ denotes a halogen atom or an alkyl group of 1 to10 carbon atoms which may be unsubstituted or substituted by a hydroxyl group, and

q denotes zero, 1 or 2.

4. A composition according to any one of the preceding claims, in which $R^3$ and $R^4$ each denote an alkyl group of 1 to 6 carbon atoms, a hydroxyalkyl group of 2 to 4 carbon atoms, a cycloalkyl group of 3 to 7 carbon atoms or an aralkyl group of 7 to 9 carbon atoms.

5. A composition according to claim 4, in which $R^3$ and $R^4$ each denote a methyl group, or $R^3$ denotes a methyl group and $R^2$ denotes a 2-hydroxyethyl group.

6. A composition according to any one of claims 3 to 5, in which q denotes zero, or 1 and $R^5$ denotes $-NO_2$, -Cl or a methyl group.

7. A composition according to any one of claims 3 to 6, in which $R^6$ denotes a hydrogen atom, an

alkyl group of 1 to 6 carbon atoms or a hydroxyalkyl group of 2 to 4 carbon atoms.

8. A composition according to any one of the preceding claims, in which

(b) is N-(2-carboxamidophenyl)-N',N'-dimethylurea, N-(3-carboxamidophenyl)-N',N'-dimethylurea, N-(4-carboxamidophenyl)-N',N'-dimethylurea, N-(2-carboxamido-4-chlorophenyl)-N',N'-dimethylurea, N-(2-carboxamido-4-nitrophenyl)-N',N'-dimethylurea,N-(2-carboxamido-4-methylphenyl)-N',N'-dimethylurea, N-[2-(N''-methylcarboxamido)-phenyl]-N',N'-dimethylurea, N-[2-(N''-butylcarboxamido)phenyl]-N',N'-dimethylurea, N-(2-carboxamidophenyl)-N''-methyl-N'-(2-hydroxyethyl)urea or N-[2-(N''-(2-hydroxyethyl)carboxamido)phenyl]-N',N'-dimethylurea.

9. A composition according to any one of the preceding claims, which contains in addition

(c) a smaller amount by weight, based on the weight of (b), of an accelerator for the heat-curing, selected from dicyandiamide, carboxylic acid hydrazides, succinimide, cyanoacetamide, 1-cyano-3-(lower alkyl)guanidines of up to 3 carbon atoms in the alkyl groups, imidazoles and salts of carboxylic acids with tertiary amines, the amount of (b) and (c) together constituting an adequate amount for the heat-curing of the epoxy resin (a).

10. A composition according to any one of claims 1 to 8, which contains in addition

(d) a larger amount, based on the weight of (b), of a heat-curing agent for epoxy resins selected from dicyandiamide, melamine, carboxylic acid hydrazides, succinimide, cyanoacetamide, 1-cyano-3-(lower alkyl)guanidines, of up to 3 carbon atoms in the alkyl groups, imidazoles and salts of carboxylic acids with tertiary amines, the amount of (d) and (b) together constituting an adequate amount for the heat-curing of the epoxy resin (a).

11. A composition according to any one of the preceding claims, in which (a) is a polyglycidyl ether, a polyglycidyl ester, an N,N,-diglycidylhydantoin, or a poly(N-glycidyl) derivative of an aromatic amine.

12. A crosslinked product obtained by heat-curing a composition according to any one of the preceding claims.

**Claims for the Contracting State:** AT

1. A heat-curable composition containing

(a) an epoxy resin and

(b) an effective amount of a urea of formula VI

$$Ar\text{-}NHCON(R^3)R^4 \qquad (VI),$$

in which

Ar represents an aromatic group which is linked through an aromatic carbon atom to the nitrogen atom indicated in the formula and is substituted by an amido group, and

$R^3$ and $R^4$ each represent an aliphatic, cycloaliphatic, or araliphatic hydrocarbon radical, which may be unsubstituted or substituted by a halogen atom or by a hydroxyl group, with the proviso that $R^3$ may also represent a hydrogen atom, or $R^3$ and $R^4$ together with the nitrogen atom indicated in formula VI form a heterocyclic ring containing 3 to 5 carbon atoms, and optionally one oxygen atom, in the ring.

2. A composition according to claim 1, in which Ar represents a phenyl group which is substituted by an amido group and may also be substituted by one or more halogen atoms, amino or nitro groups, or alkyl groups of 1 to 10 carbon atoms.

3. A composition according to claim 1 or 2, in which (b) is an amidophenylurea of formula VII

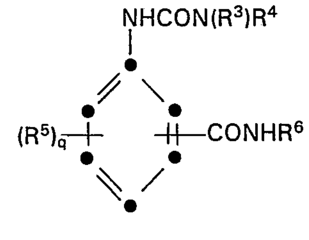

(VII),

in which $R^3$ and $R^4$ are as defined in claim 1,

$R^5$ denotes a halogen atom, an amino or nitro group or an alkyl group of 1 to 10 carbon atoms,

$R^6$ denotes a halogen atom or an alkyl group of 1 to10 carbon atoms which may be unsubstituted or substituted by a hydroxyl group, and

q denotes zero, 1 or 2.

4. A composition according to any one of the preceding claims, in which $R^3$ and $R^4$ each denote an alkyl group of 1 to 6 carbon atoms, a hydroxyalkyl group of 2 to 4 carbon atoms, a cycloalkyl group of 3 to 7 carbon atoms or an aralkyl group of 7 to 9 carbon atoms.

5. A composition according to claim 4, in which $R^3$ and $R^4$ each denote a methyl group, or $R^3$ denotes a methyl group and $R^2$ denotes a 2-hydroxyethyl group.

6. A composition according to any one of claims 3 to 5, in which q denotes zero, or 1 and $R^5$ denotes $-NO_2$, -Cl or a methyl group.

7. A composition according to any one of claims 3 to 6, in which $R^6$ denotes a hydrogen atom, an alkyl group of 1 to 6 carbon atoms or a hydroxyalkyl group of 2 to 4 carbon atoms.

8. A composition according to any one of the preceding claims, in which

(b) is N-(2-carboxamidophenyl)-N',N'-dimethylurea, N-(3-carboxamidophenyl)-N',N'-dimethylurea, N-(4-carboxamidophenyl)-N',N'-dimethylurea, N-(2-carboxamido-4-chlorophenyl)-N',N'-dimethylurea, N-(2-carboxamido-4-nitrophenyl)-N',N'-dimethylurea,N-(2-carboxamido-4-methylphenyl)-N',N'-dimethylurea, N-[2-(N''-methylcarboxamido)-phenyl]-N',N'-dimethylurea, N-[2-(N''-butylcarboxamido)phenyl]-N',N'-dimethylurea, N-(2-carboxamidophenyl)-N''-methyl-N'-(2-hydroxyethyl)urea or N-[2-(N''-(2-hydroxyethyl)carboxamido)phenyl]-N',N'-dimethylurea.

9. A composition according to any one of the preceding claims, which contains in addition

(c) a smaller amount by weight, based on the weight of (b), of an accelerator for the heat-curing, selected from dicyandiamide, carboxylic acid hydrazides, succinimide, cyanoacetamide, 1-cyano-3-(lower alkyl)guanidines of up to 3 carbon atoms in

the alkyl groups, imidazoles and salts of carboxylic acids with tertiary amines, the amount of (b) and (c) together constituting an adequate amount for the heat-curing of the epoxy resin (a).

10. A composition according to any one of claims 1 to 8, which contains in addition

(d) a larger amount, based on the weight of (b), of a heat-curing agent for epoxy resins selected from dicyandiamide, melamine, carboxylic acid hydrazides, succinimide, cyanoacetamide, 1-cyano-3-(lower alkyl)guanidines, of up to 3 carbon atoms in the alkyl groups, imidazoles and salts of carboxylic acids with tertiary amines, the amount of (d) and (b) together constituting an adequate amount for the heat-curing of the epoxy resin (a).

11. A composition according to any one of the preceding claims, in which (a) is a polyglycidyl ether, a polyglycidyl ester, an N,N,-diglycidylhydantoin, or a poly(N-glycidyl) derivative of an aromatic amine.

**Revendications pour les Etats contractants:**
BE, CH, DE, FR, GB, IT. LI, NL, SE

1. Compositions thermodurcissables qui contiennent:

(a) une résine époxidique et

(b) une quantité efficace d'une urée répondant à la formule VI:

$$Ar\text{-}NHCON(R^3)R^4 \qquad (VI),$$

dans laquelle

Ar représente un radical aromatique qui porte un radical d'amide et qui est relié à l'atome d'azote représenté sur la formule VI par un atome de carbone aromatique,

$R^3$ et $R^4$ représentent chacun un radical hydrocarboné aliphatique, cycloaliphatique ou araliphatique qui ne porte pas de substituant ou qui peut porter un atome d'halogène ou un radical hydroxy, $R^3$ pouvant également représenter un atome d'hydrogène, ou $R^3$ et $R^4$ ensemble, et avec l'atome d'azote représenté sur la formule VI, un hétérocycle qui contient, dans son noyau, de 3 à 5 atomes de carbone et, éventuellement, un atome d'oxygène.

2. Composition selon la revendication 1, dans laquelle Ar représente un radical phényle porteur d'un radical amido, ce radical phényle pouvant en outre porter un ou plusieurs substituants pris dans l'ensemble constitué par les atomes d'halogène, les radicaux amino et nitro et les radicaux alkyles contenant de 1 à 10 atomes de carbone.

3. Compositions selon l'une des revendications 1 et 2, dans lesquelles (b) est une amido-phénylurée répondant à la formule VII:

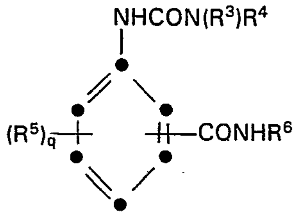

(VII),

dans laquelle:

$R^3$ et $R^4$ ont les significations qui leur ont été données à la revendication 1,

$R^5$ représente un atome d'halogène, un radical amino, un radical nitro ou un radical alkyle contenant de 1 à 10 atomes de carbone,

$R^6$ représente un atome d'hydrogène ou un radical alkyle en $C_1$-$C_{10}$ qui ne porte pas de substituant ou qui porte un radical hydroxy ,et

q est égal à 0, à 1 ou à 2.

4. Composition selon l'une quelconque des revendications précédentes, dans laquelle $R^3$ et $R^4$ représentent chacun un alkyle contenant de 1 à 6 atomes de carbone, un hydroxyalkyle contenant de 2 à 4 atomes de carbone, un cycloalkyle contenant de 3 à 7 atomes de carbone ou un aralkyle contenant de 7 à 9 atomes de carbone.

5. Compositions selon la revendication 4, dans lesquelles $R^3$ et $R^4$ représentent chacun un radical méthyle, ou $R^3$ représente un radical méthyle et $R^4$ un radical hydroxy-2 éthyle.

6. Compositions selon l'une quelconque des revendications 3 à 5, dans lesquelles q est égal à 0 ou à 1 et $R^5$ représente $-NO_2$, -Cl ou un radical méthyle.

7. Compositions selon l'une quelconque des revendications 3 à 6, dans lesquelles $R^6$ représente un atome d'hydrogène, un alkyle contenant de 1 à 6 atomes de carbone ou un hydroxyalkyle contenant de 2 à 4 atomes de carbone.

8. Composition selon l'une quelconque des revendications précédentes, dans lesquelles

(b) est la N-(carbamoyl-2 phényl)-N',N'-diméthyl-urée, la N-(carbamoyl-3 phényl)-N',N'-diméthyl-urée, la N-(carbamoyl-4-phényl)-N',N'-diméthyl-urée, la N-(carbamoyl-2 chloro-4 phényl)-N',N'-diméthyl-urée la N-(carbamoyl-2 nitro-4 phényl)-N',N'-diméthyl-urée, la N-(carbamoyl-2 méthyl-4 phényl)-N',N'-diméthyl-urée, la N-[(N-méthylcarbamoyl)-2 phényl]-N',N'-diméthyl-urée, la N-[(N-butylcarbamoyl)-2 phényl]-N',N'-diméthyl-urée, la N-(carbamoyl-2 phényl)-N',-méthyl-N'-hydroxy-2 éthyl)-urée et la N-[(N-(hydroxy-2 éthyl)-carbamoyl)-2 phényl]-N',N'-diméthyl-urée.

9. Compositions selon l'une quelconque des revendications précédentes, compositions qui contiennent, en plus,

(c) une plus petite quantité pondérale, par rapport au poids de (b), d'un accélérateur pour le thermodurcissement choisi dans l'ensemble constitué par la cyanoguanidine, les carbohydrazides, le succinimide, le cyanacétamide, les cyano-1 alkyl-3 guanidines dont les alkyles contiennent au plus 3 atomes de carbone, les imidazoles et les sels dérivant d'acides carboxyliques et d'amines tertiaires, la somme de (b) et (c) représentant la quantité suffisante pour le thermodurcissement de la résine époxydique (a).

10. Composition selon l'une quelconque des revendications 1 à 8, composition qui contient, en plus,

(d) une quantité plus grande, par rapport au poids de (b), d'un agent thermodurcisseur pour des résines époxydiques choisi dans l'ensemble constitué par la cyanoguanidine, la mélamine, les carbohydrazides, le succinimide, le cyanacétamide, les cyano-1 alkyl-3 guanidines dont les alkyles contiennent au plus 3 atomes de carbone, les imidazoles et les sels dérivant d'acides carboxyliques et d'amines tertiaires, la somme de (d) et (c) représentant la quantité suffisante pour le thermodurcissement de la résine époxidique (a).

11. Composition selon l'une quelconque des revendications précédentes, dans laquelle (a) est un éther polyglycidylique, un ester polyglycidylique, une N,N'-diglycidyl-hydantoïne ou un dérivé poly-(N-glycidylique) d'amine aromatique.

12. Produits réticulés que ont été obtenus par thermodurcissement d'une composition selon l'une quelconque des revendicatins précédentes.

**Revendications pour l'Etat contractant:** AT

1. Compositions thermodurcissables qui contiennent:

(a) une résine époxidique et

(b) une quantité efficace d'une urée répondant à la formule VI:

$$\text{Ar-NHCON}(R^3)R^4 \qquad \text{(VI)},$$

dans laquelle

Ar représente un radical aromatique qui porte un radical d'amide et qui est relié à l'atome d'azote représenté sur la formule VI par un atome de carbone aromatique,

$R^3$ et $R^4$ représentent chacun un radical hydrocarboné aliphatique, cycloaliphatique ou araliphatique qui ne porte pas de substituant ou qui peut porter un atome d'halogène ou un radical hydroxy, $R^3$ pouvant également représenter un atome d'hydrogène, ou $R^3$ et $R^4$ ensemble, et avec l'atome d'azote représenté sur la formule VI, un hétérocycle qui contient, dans son noyau, de 3 à 5 atomes de carbone et, éventuellement, un atome d'oxygène.

2. Composition selon la revendication 1, dans laquelle Ar représente un radical phényle porteur d'un radical amido, ce radical phényle pouvant en outre porter un ou plusieurs substituants pris dans l'ensemble constitué par les atomes d'halogène, les radicaux amino et nitro et les radicaux alkyles contenant de 1 à 10 atomes de carbone.

3. Compositions selon l'une des revendications 1 et 2, dans lesquelles (b) est une amido-phénylurée répondant à la formule VII:

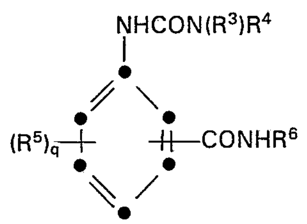

(VII),

dans laquelle:

$R^3$ et $R^4$ ont les significations qui leur ont été données à la revendication 1,

$R^5$ représente un atome d'halogène, un radical amino, un radical nitro ou un radical alkyle contenant de 1 à 10 atomes de carbone,

$R^6$ représente un atome d'hydrogène ou un radical alkyle en $C_1$-$C_{10}$ qui ne porte pas de substituant ou qui porte un radical hydroxy ,et

q est égal à 0, à 1 ou à 2.

4. Composition selon l'une quelconque des revendications précédentes, dans laquelle $R^3$ et $R^4$ représentent chacun un alkyle contenant de 1 à 6 atomes de carbone, un hydroxyalkyle contenant de 2 à 4 atomes de carbone, un cycloalkyle contenant de 3 à 7 atomes de carbone ou un aralkyle contenant de 7 à 9 atomes de carbone.

5. Compositions selon la revendication 4, dans lesquelles $R^3$ et $R^4$ représentent chacun un radical méthyle, ou $R^3$ représente un radical méthyle et $R^4$ un radical hydroxy-2 éthyle.

6. Compositions selon l'une quelconque des revendications 3 à 5, dans lesquelles q est égal à 0 ou à 1 et $R^5$ représente $-NO_2$, -Cl ou un radical méthyle.

7. Compositions selon l'une quelconque des revendications 3 à 6, dans lesquelles $R^6$ représente un atome d'hydrogène, un alkyle contenant de 1 à 6 atomes de carbone ou un hydroxyalkyle contenant de 2 à 4 atomes de carbone.

8. Composition selon l'une quelconque des revendications précédentes, dans lesquelles

(b) est la N-(carbamoyl-2 phényl)-N',N'-diméthyl-urée, la N-(carbamoyl-3 phényl)-N',N'-diméthyl-urée, la N-(carbamoyl-4-phényl)-N',N'-diméthyl-urée, la N-(carbamoyl-2 chloro-4 phényl)-N',N'-diméthyl-urée la N-(carbamoyl-2 nitro-4 phényl)-N',N'-diméthyl-urée, la N-(carbamoyl-2 méthyl-4 phényl)-N',N'-diméthyl-urée, la N-[(N-méthylcarbamoyl)-2 phényl]-N',N'-diméthyl-urée, la N-[(N-butylcarbamoyl)-2 phényl]-N',N'-diméthyl-urée, la N-(carbamoyl-2 phényl)-N',-méthyl-N'-hydroxy-2 éthyl)-urée et la N-[(N-(hydroxy-2 éthyl)-carbamoyl)-2 phényl]-N',N'-diméthyl-urée.

9. Compositions selon l'une quelconque des revendications précédentes, compositions qui contiennent, en plus,

(c) une plus petite quantité pondérale, par rapport au poids de (b), d'un accélérateur pour le thermodurcissement choisi dans l'ensemble constitué par la cyanoguanidine, les carbohydrazides, le succinimide, le cyanacétamide, les cyano-1 alkyl-3 guanidines dont les alkyles contiennent au plus 3 atomes de carbone, les imidazoles et les sels dérivant d'acides carboxyliques et d'amines tertiaires, la somme de (b) et (c) représentant la quantité suffisante pour le thermodurcissement de la résine époxydique (a).

10. Composition selon l'une quelconque des revendications 1 à 8, composition qui contient, en plus,

(d) une quantité plus grande, par rapport au poids de (b), d'un agent thermodurcisseur pour des résines époxydiques choisi dans l'ensemble constitué par la cyanoguanidine, la mélamine, les carbohydrazides, le succinimide, le cyanacétamide, les cyano-1 alkyl-3 guanidines dont les alkyles contiennent au plus 3 atomes de carbone, les imidazoles et les sels dérivant d'acides carboxyliques et d'amines tertiaires, la somme de (d) et (c) représentant la quantité suffisante pour le thermodurcissement de la résine époxidique (a).

11. Composition selon l'une quelconque des revendications précédentes, dans laquelle (a) est un éther polyglycidylique, un ester polyglycidylique, une N,N'-diglycidyl-hydantoïne ou un dérivé poly-(N-glycidylique) d'amine aromatique.